# EUROPÄISCHE PATENTSCHRIFT

(11) **EP 2 918 523 B1**
(45) Veröffentlichungstag und Bekanntmachung des Hinweises auf die Patenterteilung: **03.02.2016**
(21) Anmeldenummer: 14158841.8
(22) Anmeldetag: 11.03.2014
(51) Int. Cl.: B65G 39/02, B65G 43/08, B65G 13/06

(54) **Kapazitiver Sensor für eine Rolle und Verfahren zur Erkennung von Objekten auf einer Rollenbahn**
Capacitive sensor for a roller and method for recognising objects on a roller conveyor
Détecteur capacitif pour un rouleau et procédé de détection d'objets sur un transporteur à rouleaux

(43) Veröffentlichungstag der Anmeldung: 16.09.2015
(73) Patentinhaber: SICK AG, 79183 Waldkirch (DE)
(72) Erfinder: Jaksic, Davorin, 79211 Denzlingen (DE); Märkle, Christoph, 79102 Freiburg (DE); Weber, Thomas, 77960 Seelbach (DE)
(74) Vertreter: Hehl, Ulrich

(56) Entgegenhaltungen:
- DE-U1-202007 015 529
- US-A1- 2011 116 733
- US-A1- 2012 312 663

## Beschreibung

Die Erfindung betrifft einen kapazitiven Sensor für eine Rolle einer Rollenbahn und ein Verfahren zur Erkennung von auf einer Rollenbahn befindlichen Objekten nach dem Oberbegriff von Anspruch 1 beziehungsweise 15, wie Sie aus der DE 20 2007 015 529 U1 bekannt sind.

Rollenbahnen werden in der Regel als Rollenförderer in der Lager - und Fördertechnik eingesetzt. Einige der Rollen besitzen einen aktiven Antrieb, der sie in Rotation versetzt. Die übrigen passiven Rollen können über Bänder von den aktiven Rollen mitbewegt werden, oder die in Bewegung versetzten Objekte überbrücken solche Rollen aufgrund der Trägheit. Um den Materialfluss zu steuern, soll die Rollenbahn an bestimmten Positionen der Förderstrecke auf Anwesenheit von Objekten überwacht werden. Dazu sind verschiedenste Sensoren bekannt, wie optische, magnetische, induktive oder kapazitive Sensoren, die am entsprechenden Ort der Förderstrecke angebracht werden, um das Fördergut auf der Rollenbahn zu erfassen.

Die Montage derartiger Sensoren mit geeigneter Befestigungstechnik und Verkabelung zum Anschluss an eine Energieversorgung und ein Kommunikationsnetz, also an eine Steuereinheit oder in Kettenschaltung an weitere Sensoren, erfordert einen erheblichen Aufwand, zusätzlichen Platzbedarf sowie eine Einzeljustage der zahlreichen separat montierten Sensoren. Außerdem sind extern montierte Sensoren prinzipiell anfällig gegen mechanische Beeinträchtigungen durch die Umgebung, wie Verschmutzung oder Beschädigung der Detektionsflächen. Der Wartungsaufwand wird dadurch erhöht, und ferner wird eine robuste Gehäuseausführung zum mechanischen Schutz der Sensoren notwendig.

Daher wird im Stand der Technik, etwa der DE 101 31 019 A1, vorgeschlagen, eine Sensorik direkt in Rollen einer Rollenbahn zu integrieren. In einer Ausführungsform umfasst die integrierte Sensorik kapazitive Sensoren, die so montiert werden, dass ihr Erfassungsfeld in Richtung des Förderguts ausgerichtet ist. Rollen aus Kunststoff sollen dabei ausgeblendet werden, aber es wird nicht offenbart, wie dies erreicht werden kann.

Die DE 20 2007 015 529 U1 offenbart eine Rolle für eine Rollenbahn mit einem integrierten kapazitiven Sensor, der zusätzlich auf einer der Förderseite abgewandten Seite einen Referenzsensor vorsieht. Ein Schaltsignal bei einem über die Rolle geförderten Objekt wird dann aus einem Differenzsignal zwischen dem Signal des eigentlichen Sensors und des Referenzsensors bestimmt. Außerdem wird vorgeschlagen, in Längsrichtung der Rolle mehrere Sensoren hintereinander anzuordnen.

Problematisch bei den herkömmlichen Ansätzen mit integrierten kapazitiven Sensoren ist, dass durch diverse Fremdeinflüsse, wie Unregelmäßigkeiten der Bewegung der Rolle durch Lagerspiel, Temperaturänderungen, Abnutzung oder Verschmutzung, das Sensorsignal in einem Maße schwankt, dass eine zuverlässige Objekterkennung nicht möglich ist. Dies wird auch durch das Referenzsignal eines weiteren kapazitiven Sensors gemäß DE 20 2007 015 529 U1 oder eine Segmentierung in Längsrichtung der Rolle nicht behoben.

Es gibt eine Vielzahl anderer Anwendungen von kapazitiven Sensoren. Die EP 2 657 663 A1 offenbart einen kapazitiven Füllstandssensor mit einer Sonde, die in einer Längsrichtung mehrere aufeinanderfolgende Segmente und in jedem Segment wiederum mehrere Elektroden aufweist. Durch Bestimmen der Kapazität zwischen Elektroden eines Segments wird der Füllstand anhand der Stelle in einem Behälter gemessen, wo sich ein Übergang zwischen Medium und Luft befindet. Diese Sonde ruht ebenso wie der umgebende Behälter, so dass sich ähnliche Probleme wie die geschilderten Störsignale an beweglichen Rollen gar nicht erst stellen.

Die US 2011/0116733 A1 offenbart eine Wälzlageranordnung mit einer kapazitiven Sensoreinheit zur Erfassung der Winkelposition beziehungsweise Drehzahl. Die Sensoreinheit umfasst einen Rotor als drehbar gelagertes erstes Sensorelement und einen Stator als ortsfestes zweites Sensorelement. Im Stator ist ein Kondensator ausgebildet, während der Rotor eine zahnradartige Struktur aufweist, die als Maßverkörperung dient. Bei einer Drehung des Rotors moduliert die Maßverkörperung die Kapazität und erzeugt so das Sensorsignal.

Verschiedene Anbieter stellen programmierbare Auswertungschips zur mehrkanaligen Kapazitätsmessung zur Verfügung, etwa ein PSoC (programmable System-on-Chip) der Firma Cypress. Solche Auswertungschips sind sehr leistungsfähig und dennoch kostengünstig, da sie in großen Stückzahlen für bewegungsempfindliche Bildschirme (Touchscreens) oder Bedienfelder eingesetzt werden. Konkrete Lösungen, die den robusten Bedingungen der industriellen Realität standhalten, sind damit jedoch noch längst nicht gefunden.

Es ist daher Aufgabe der Erfindung, eine verbesserte kapazitive Erfassung von Objekten an einer Rollenbahn zu ermöglichen.

Diese Aufgabe wird durch einen kapazitiven Sensor für eine Rolle einer Rollenbahn und ein Verfahren zur Erkennung von auf einer Rollenbahn befindlichen Objekten nach Anspruch 1 beziehungsweise 15 gelöst. Ein kapazitiver Sensor mit einer Vielzahl von Messelektroden erkennt auf einer Rollenbahn befindliche Objekte anhand von Kapazitätsänderungen. Der Sensor wird dazu in eine Rolle der Rollenbahn integriert. Die Rolle hat eine starre Drehachse sowie die eigentliche Rolle, d.h. ein zylindrisches Element, das um die Drehachse rotiert und dabei an seinem Außenumfang Objekte fördert. Der Sensor wird typischerweise starr mit der Drehachse verbunden. Die Erfindung geht nun von dem Grundgedanken aus, Messelektroden, zwischen denen die durch Objekte auf der Rolle veränderliche Kapazität gemessen wird, mit der Rolle mitzudrehen. Deshalb sind dann die Messkapazitäten nicht von durch die Rolle verursachten Kapazitätsschwankungen, etwa durch Abstandsschwankungen oder inhomogene Materialverteilung der Rolle betroffen. Dabei wird zumindest ein Teil der Messelektroden mitdrehend angeordnet. In einer bevorzugten Ausführungsform sind dann alle Messelektroden mitdrehend. Es ist aber auch denkbar, die Messkonzepte zu mischen und stationäre Messelektroden nach dem Stand der Technik mit einzubeziehen.

Die Erfindung hat den Vorteil, dass sich die mitdrehenden Messelektroden stets an der gleichen Stelle der Rolle befinden. Das vermeidet störende Feldänderungen dadurch, dass sich die Rolle während ihrer Rotation an der Messelektrode vorbeibewegt, und ermöglicht so eine viel präzisere Messung.

Der Sensor weist bevorzugt Kopplungselektroden auf, die bezüglich einer Drehachse der Rolle ruhend angeordnet sind und mit Messelektroden Kopplungskapazitäten bilden. Das Signal der mitbewegten Messelektroden wird auf diese Weise von dem mitbewegten Teil der Rolle in den mit der Drehachse ruhenden Teil übertragen.

Bevorzugt bilden erste Kopplungselektroden einen stationären Ring und zweite Kopplungselektroden einen mit der Rolle mitdrehenden Ring. Die Kopplungskapazitäten zwischen stationärem und mitdrehendem Teil der Rolle sind dann als konzentrisch ineinander angeordnete Ringe ausgebildet. Durch diese Geometrie bleibt die kapazitive Kopplung über die gesamte Drehung erhalten.

Die Messelektroden sind bevorzugt ringförmig um eine Drehachse der Rolle ausgebildet. Dann werden Messkapazitäten in der Längsrichtung parallel zur Drehachse zwischen nebeneinander angeordneten Ringen gebildet. Diese und weitere in verschiedenen Ausführungsformen geforderte Anordnungen der Messelektroden sollen trotz des bestimmten Artikels nicht ausschließen, dass es weitere Messelektroden ohne die jeweils genannten Eigenschaften gibt. Prinzipiell sind alle möglichen Mischungen von Geometrien und Anordnungen möglich. Homogene Konzepte mit gleichartigen Messelektroden sind allerdings wesentlich leichter zu bauen und auszuwerten.

Die ringförmigen Messelektroden fungieren bevorzugt zugleich als Kopplungselektroden. Die Messelektroden bilden also einerseits untereinander Messkapazitäten. Andererseits koppeln die mitbewegten Messelektroden auch an Kopplungselektroden im stationären Teil der Rolle, um die Signale kapazitiv dorthin zu übertragen. Durch diese Doppelfunktion werden im mitdrehenden Teil der Rolle keine zusätzlichen Kopplungselektroden benötigt.

Die ringförmigen Messelektroden sind bevorzugt in Umfangsrichtung segmentiert. Dadurch entsteht eine Vielzahl zusätzlicher Messkapazitäten zwischen den Ringsegmenten innerhalb eines Rings und damit eine zusätzliche Messauflösung in Umfangsrichtung der Rolle.

Die Messelektroden weisen bevorzugt in axiale Richtung der Rolle langgestreckte Streifen auf. Es entsteht ein Feld mit einer Vielzahl streifenförmiger und in Längsrichtung parallel zu der Drehachse ausgerichteter Messelektroden. Dadurch ergibt sich wie bei segmentierten Ringen eine zusätzliche Messauflösung in Umfangsrichtung, jedoch mit dem Vorteil, dass die Fläche der Messelektroden nicht an die Breite des Rings gebunden ist.

Die Streifen sind bevorzugt mit einem Ring verbunden. Dadurch verbinden sich die Vorteile ringförmiger Kopplungskapazitäten und streifenförmiger Messkapazitäten. Die mit einem Ring verbundenen Streifen sorgen für eine Transformation von radialer in axiale Richtung. Durch die axiale Längserstreckung können die Messelektroden eine große Fläche einnehmen und dadurch besonders genau die durch Objekte verursachten Kapazitätsänderungen messen.

Der Sensor weist bevorzugt in axialer Richtung mehrere Segmente mit jeweils voneinander entkoppelten Messelektroden auf. Es handelt sich also funktional um eine Reihenanordnung mehrerer kapazitiver Sensoren längs der Drehachse, so dass eine bessere Erfassung und größere Messauflösung in axialer Richtung erreicht wird. Die Segmente können in sich in allen Varianten aufgebaut sein, sind aber dabei bevorzugt untereinander gleich, um den resultierenden Sensor zu vereinfachen.

Bevorzugt ist eine Auswertungseinheit vorgesehen, die dafür ausgebildet ist, aus den von der Messeinheit bestimmten Kapazitäten eine örtlich und/oder zeitlich aufgelöste Kapazitätsänderung zu ermitteln und danach Objekte zu erfassen oder zu klassifizieren. Hier wird also sprachlich zwischen der Messeinheit, die Kapazitäten zwischen diversen Paaren oder Gruppen von Messelektroden und damit ortsaufgelöst sowie zu mehreren Zeitpunkten und damit zeitaufgelöst bestimmen kann, und einer Auswertungseinheit zur weiteren Verarbeitung dieser Rohdaten unterschieden. Prinzipiell können aber beide Verarbeitungen auch auf dem gleichen Chip implementiert sein. Denkbar ist, nur die Messeinheit in der Rolle unterzubringen und die Rohdaten nach außen zu führen und dort in der dann extern ausgebildeten Auswertungseinheit weiterzuverarbeiten.

Die Auswertungseinheit ist bevorzugt dafür ausgebildet, Geometrieeigenschaften oder Bewegungsbahnen erfasster Objekte zu bestimmen. Die Messeinheit stellt allgemein ausgedrückt eine zeitabhängige Matrix der an den diversen Messkapazitäten bestimmten Signale zur Verfügung. Das lässt sich nun in sehr verschiedener Komplexität auswerten. In einem einfachen Fall wird nur überprüft, ob die Summe der Änderungen gegenüber einem Referenzsignal ausreicht, um ein Objekt als erkannt anzusehen. Es stehen aber durch Einzelauswertung oder verschiedene Gruppenzusammenfassungen von Messkapazitäten sowie dem jeweiligen Zeitverlauf dieser Signale auch Informationen zur Verfügung, um weitere Informationen über die Objekte zu gewinnen und diese beispielsweise nach ihrer Größe oder Bewegungsbahn zu klassifizieren.

Die Auswertungseinheit ist bevorzugt dafür ausgebildet, ein Referenzsignal bei Abwesenheit von Objekten zu bestimmen, insbesondere das Referenzsignal zyklisch oder auf Anfrage erneut zu bestimmen. Dieses Referenz- oder Nullsignal bildet eine Erwartungshaltung, und wenn sich ein Objekt auf der Rolle befindet, löst dies demgegenüber eine signifikante Signaländerung aus, die aber auch nur für die kurze Dauer der Objektanwesenheit währt. Viele Störungen etwa aufgrund von Temperaturschwankungen oder Verschmutzungen dagegen ändern das Signal typischerweise langsamer und mit kleinerer Amplitude. Solche Effekte können also nicht nur anfänglich, sondern auch im weiteren Betrieb zyklisch oder auf Anfrage berücksichtigt werden, indem das Referenzsignal neu bestimmt wird. Dabei findet eine solche Autokalibration vorzugsweise automatisch und nur dann statt, wenn aktuell kein Objekt erfasst ist.

Die Auswertungseinheit ist bevorzugt für eine Drehüberwachung der Rolle anhand der bei einem in Umfangsrichtung der Rolle angebrachten Referenzelement gemessenen Kapazität ausgebildet. Objekte können sich regelmäßig nur oben auf der Rolle befinden. Der übrige Umfang der Rolle steht also für andere Messungen zur Verfügung. Bei einer drehenden Rolle wird erwartet, dass eine Referenzkapazität in diesem Umfangsbereich einmal je Umdrehung erfasst wird. Damit kann festgestellt werden, ob und mit welcher Geschwindigkeit sich die Rolle dreht. Außerdem kann auch eine Fehlererkennung oder eine Autokalibration das Signal an der Referenzkapazität nutzen, das sich nur innerhalb einer Toleranz von einem zuvor eingelernten Signal an der Referenzkapazität unterscheiden sollte.

In vorteilhafter Weiterbildung ist eine Rolle mit einem darin integrierten erfindungsgemäßen Sensor vorgesehen. Diese Rolle kann einen eigenen Antrieb aufweisen, also eine aktive Rolle sein. Dann nutzt der Sensor vorzugsweise die Versorgungs- und Steuerungsleitungen dieses Antriebs mit. Der Sensor kann aber auch in eine passive Rolle ohne eigenen Antrieb eingesetzt sein. Dann benötigt der Sensor eigene Anschlüsse beziehungsweise versorgt sich und kommuniziert drahtlos. Alternativ ist der Sensor mit einer Batterie oder einer eigenen Energieerzeugung aus der Drehbewegung ausgerüstet.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Schnittdarstellung einer Rolle mit einem kapazitiven Sensor darin;
- Fig. 2: ein Ersatzschaltbild der Ansteuerung der Koppel- und Messkapazitäten durch eine Messeinheit in einer Ausführungsform eines kapazitiven Sensors;
- Fig. 3: eine dreidimensionale Außenansicht auf die Messelektroden eines kapazitiven Sensors;
- Fig. 4: eine Schnittdarstellung einer Rollenbahn und der Elektroden eines kapazitiven Sensors; und
- Fig. 5: eine dreidimensionale Ansicht einer Konfiguration von Koppel- und Messelektroden einer Ausführungsform eines kapazitiven Sensors.

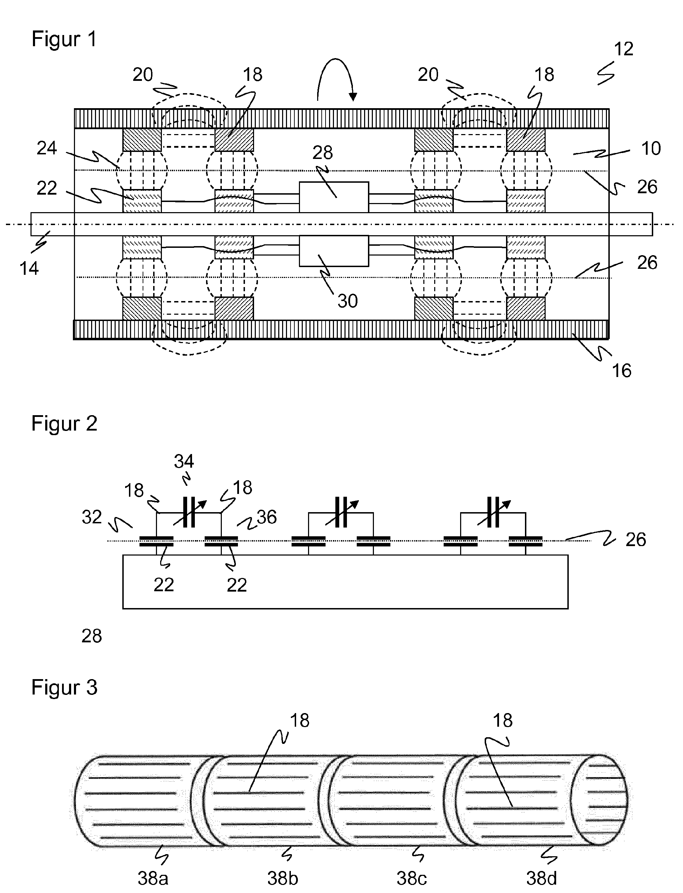

Figur 1 zeigt eine Schnittdarstellung eines kapazitiven Sensors 10, der in eine Rolle 12 einer Rollenbahn integriert ist. Die Rolle 12 weist eine Drehachse 14 auf, um die sich das eigentliche Rollelement 16 der Rolle 12 dreht. Der Sensor 10 umfasst eine Vielzahl von Messkapazitäten, die jeweils zwischen Paaren oder Gruppen von Messelektroden 18 gebildet sind. Ein auf der Rolle 12 befindliches Objekt beeinflusst das Feld 20 der Messkapazitäten und kann daran erkannt werden.

Die Messelektroden 18 sind mit dem Rollelement 16 verbunden und vollziehen somit dessen Rotation mit. An der Drehachse 14 und somit bezüglich der Rotation der Rolle 12 in Ruhe sind Koppelelektroden 22 vorgesehen. Dadurch bilden sich weitere Felder 24 in Koppelkapazitäten zwischen den Koppelelektroden 22 und den Messelektroden 18. Die rotierenden Messkapazitäten sind auf diese Weise kapazitiv mit dem ruhenden Teil der Rolle 12 verbunden. Mit gepunkteten Linien 26 sind in Figur 1 Trennlinien zwischen dem ruhenden und dem rotierenden Teil der Rolle 12 eingezeichnet.

Ebenfalls mit der Drehachse 14 ruhend ist eine Messeinheit 28 vorgesehen, die mit den Koppelelektroden 22 verbunden ist. Die Messeinheit 28 kann jeweils Paare oder Gruppen von Messelektroden 18 ansteuern, um Messkapazitäten zu bestimmen und dadurch Kapazitätsänderungen aufgrund von Objekten zu erfassen. Eine Auswertungseinheit 30 empfängt diese Rohdaten der diversen von der Messeinheit 28 bestimmten Kapazitätssignale und wertet sie weiter aus, beispielsweise um ein binäres Schaltsignal in Abhängigkeit von der Anwesenheit eines Objekts auszugeben. Die Auswertungseinheit 30 kann auf einem Chip mit der Messeinheit, als eigener Baustein und auch extern außerhalb der Rolle 12 vorgesehen sein.

In der Ausführungsform des Sensors 10 nach Figur 1 sind die Messelektroden 18 und die Koppelelektroden 22 jeweils ringförmig, so dass sie in der Schnittdarstellung zweiteilig erscheinen. Das Feld 24 zur Kopplung zwischen stationärem und beweglichem Teil der Rolle 12 befindet sich daher während der gesamten Umdrehung der Rolle 12 zwischen zwei konzentrischen Ringen, die von jeweils einer Messelektrode 18 und einer Koppelelektrode 22 gebildet sind. Das Feld 20 der Messkapazität wird zwischen zwei benachbarten Ringen eines Paares Messelektroden 18 aufgespannt.

Figur 2 zeigt ein Ersatzschaltbild der von den Messelektroden 18 und den Koppelelektroden 22 gebildeten Reihenschaltung von Kondensatoren zur kontaktlosen Signalübertragung zwischen Stator und Rotor. Erneut trennt eine gepunktete Linie 26 den ruhenden und den mitbewegten Teil der Rolle 12. Die Messeinheit 28 kann eine Vielzahl von Messkanälen ansteuern, wobei Figur 2 rein beispielhaft drei Messkanäle zeigt. Jeder Messkanal weist eine Reihenschaltung von einem Koppelkondensator 32 zur Signalführung in das rotierende System, einem je nach Anwesenheit von Objekten variablen Messkondensator 34 in dem rotierenden System und wiederum einem Koppelkondensator 36 zur Signalführung aus dem rotierenden System auf. In der Ausführungsform nach Figur 1 haben die ringförmigen Messelektroden 18 eine Doppelfunktion zugleich als Gegenstück der Koppelelektroden 22 zur Ausbildung der Koppelkondensatoren 32, 36. In anderen Ausführungsformen sind dafür physikalisch getrennte, jedoch wie in dem Ersatzschaltbild gemäß Figur 2 leitend verbundene Elektroden vorgesehen.

Das Messprinzip basiert also auf der Veränderung der Messkapazität des Messkondensators 34, die über zwei Koppelkondensatoren 32, 36 zur Spaltüberbrückung zwischen Rotor und Stator der Rolle 12 angebunden ist. Geförderte Objekte verstimmen das elektrische Feld 20 und verändern diese Messkapazität. Genaugenommen wird eine Veränderung der Gesamtkapazität der Reihenschaltung der Kondensatoren 32, 34, 36 gemessen, aber die maßgeblichen Änderungen trägt der Messkondensator 34 bei.

Die Tatsache, dass die Messelektroden 18 an dem Rollenelement 16 mitdrehend angeordnet sind, unterdrückt schon für sich viele Störungen, die bei Anbringen der Messelektroden 18 im stationären Teil der Rolle 12 auftreten würden. Eine zusätzliche Störunterdrückung ist durch mehrkanaligen Abgriff und entsprechende intelligente Auswertung möglich. In Figur 1 wurde eine beispielhafte Geometrie gezeigt, bei der über mehrere Paare von ringförmigen Messelektroden 18 über die Längserstreckung der Rolle 12 parallel zu der Drehachse 14 mehrere Signale erfasst werden. Damit wird eine axiale Ortsauflösung erreicht. Durch Verfeinerung der Geometrie der Messelektroden 18 kann auch eine Ortsauflösung in Umfangsrichtung erreicht werden.

Figur 3 zeigt eine dreidimensionale Außenansicht auf die Messelektroden 18 in einer weiteren Ausführungsform. Einerseits sind hier in axialer Richtung mehrere voneinander entkoppelte Segmente 38a-d vorgesehen. Andererseits sind innerhalb der Segmente 38a-d eine Vielzahl von Messelektroden 18 beispielsweise zur differentiellen Kompensation innerhalb eines Segments 38a-d über die Umfangsrichtung verteilt. Dadurch entsteht eine Matrix von Messkapazitäten mit Ortsauflösung in axialer Richtung und in Umfangsrichtung. Die Anzahl der Segmente 38a-d sowie der Messelektroden 18 innerhalb der Segmente 38a-d variiert je nach Ausführungsform und resultiert aus verschiedenen Randbedingungen und Anforderungen, wie Rollendurchmesser, Ortsauflösung, Empfindlichkeit der kapazitiven Messung, der erforderlichen Robustheit der kapazitiven Messung gegenüber Belagsbildung auf der Rolle 12, der erforderlichen Kapazität der Messkondensatoren 34 und dergleichen.

Man beachte, dass die Darstellung der Figur 3 insofern künstlich ist, als die Messelektroden 18 üblicherweise unterhalb des eigentlichen Rollelements 16 angeordnet und damit nicht von außen sichtbar sind. Messelektroden 18 treten vorzugsweise nicht direkt mit geförderten Objekten in Berührung, vielmehr hält das Rollelement 16 selbst solchen Belastungen besser stand. Selbstverständlich darf das Rollelement 16 keine metallische Fläche und kein metallisches Gitter bilden, da ansonsten die Messelektroden 18 gegenüber den Objekten abgeschirmt würden. Die Rolle weist also vorzugsweise ein nichtleitendes, dielektrisches Material auf, das gegen Abrieb optimiert ist.

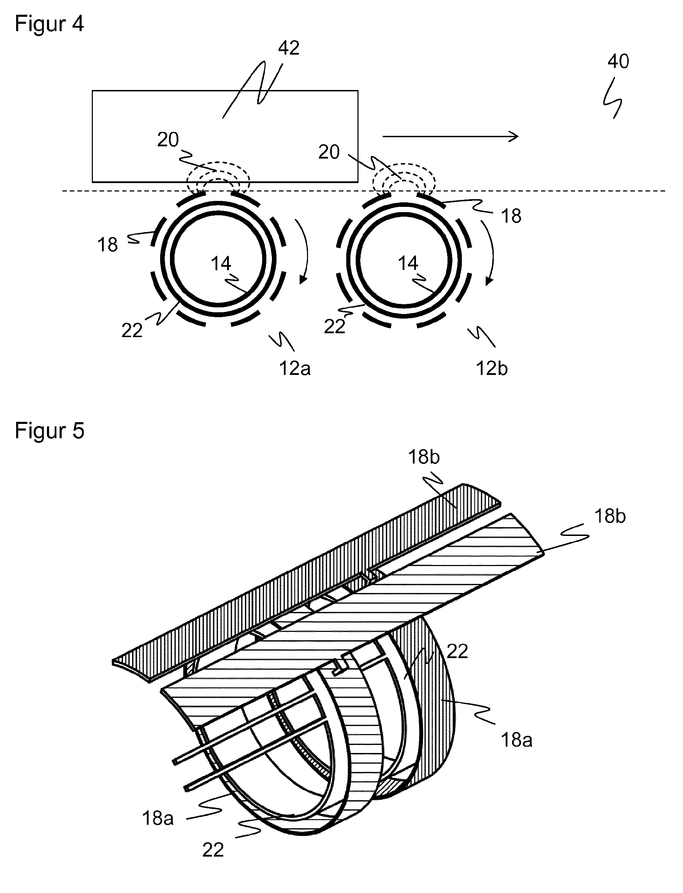

Figur 4 zeigt eine Schnittdarstellung einer Rollenbahn 40 mit rein beispielhaft nur zwei dargestellten Rollen 12a-b mit integriertem Sensor. Über der einen Rolle 12a befindet sich ein Objekt 42, das anhand der Änderungen des Feldes 20 erkannt wird. In den Rollen 12a-b sind konzentrisch zur Drehachse 14 ringförmige Koppelelektroden 22 vorgesehen. Nochmals konzentrisch dazu sind in ebenfalls ringförmiger Anordnung Messelektroden 18 angeordnet, wobei über den Umfang eine Vielzahl von Messelektroden 18 verteilt ist. Jede dieser Messelektroden 18 bildet entweder ein Ringsegment oder ist streifenförmig in axialer Richtung ausgedehnt, also in Figur 4 in einer Richtung senkrecht zur Papierebene. Damit können in Umfangsrichtung durch paarweises Ansprechen benachbarter Messelektroden 18 eine Vielzahl von Messkapazitäten gebildet werden, um in Umfangsrichtung ortsaufgelöste Signale zu erfassen.

Figur 5 zeigt eine weitere geometrische Ausführungsform der Koppelelektroden 22 und der Messelektroden 18. Hier erfolgt durch auf Ringen 18a angebrachte Streifen 18b bei den Messelektroden 18 eine Transformation von Umfangsrichtung in axiale Richtung. Beispielsweise in der Ausführungsform nach Figur 1 sind nur die Ringe, nicht jedoch die Streifen vorgesehen, so dass sich das Feld 20 in axialer Richtung zwischen den Ringen ausbildet und nicht wie in Figur 4 in axialer Richtung zwischen den Streifen 18b. Welche Anordnung vorteilhafter ist, hängt von anwendungsspezifischen Faktoren ab, wie Objektgröße, Erfassungsbreite und erforderliche kapazitiver Empfindlichkeit. In Figur 4 verläuft erneut die Trennung zwischen stationärem und rotierendem Teil zwischen den Koppelelektroden 22 und den Messelektroden 18, hier also zwischen den konzentrischen inneren und äußeren Ringen. Die Messelektroden 18 rotieren folglich um die Koppelelektroden 22. Die Messelektrode 18 lässt sich genaugenommen in den jeweiligen Ring 18a, der mit einer Koppelelektrode 22 einen Koppelkondensator 32, 36 bildet, und einen Streifen 18b unterteilen, wobei je ein Paar Streifen 18b einen Messkondensator 34 bildet. Selbstverständlich ist dabei jeweils ein Streifen 18b nur mit genau einem Ring 18a leitend verbunden, da ansonsten der Messkondensator 34 kurzgeschlossen wäre.

Die Messeinheit 28 liefert je nach geometrischer Gestaltung der Messelektroden 18 in mehreren Messkanälen in axialer Richtung und/oder in Umfangsrichtung ortsaufgelöste Messdaten, die in der Auswertungseinheit 30 algorithmisch weiter ausgewertet werden können. Zur Generierung eines Objektsignals werden die kapazitiven Signale einzeln oder zusammenfassend in Gruppen ausgewertet. Neben der reinen Anwesenheitserkennung von Objekten 42 sind auch komplexere Auswertungen denkbar, etwa dass ein Objektsignal nur erfolgt, wenn mindestens n Messkanäle in einer definierten Reihenfolge und zeitlichen Abfolge auf das Objekt 42 ansprechen.

Die Auswertung kann Objekte 42 aus deren Lage- und Größeninformation klassifizieren, indem die jeweilige Größe der Kapazitätsänderungen sowie die Anzahl der beeinflussten Messkanäle in axialer Richtung und Anzahl und Dauer der Beeinflussung von Messkanälen in Umfangsrichtung berücksichtigt werden. Dies liefert nützliche Zusatzinformationen über die Objekte 42, kann aber auch dafür genutzt werden, Objekte 42 von Störobjekten zu unterscheiden und letztere auszublenden.

Da Objekte 42 mehrere Messkanäle nacheinander oder, nach jeweils einer vollständigen Rotation, den gleichen Messkanal mehrfach durchlaufen, können frühere Messungen zur Einstellung von Schaltschwellen für spätere Messungen genutzt werden.

In einer Autokallibration wird ein Ruhesignal bei Abwesenheit von Objekten 42 durch kontinuierliche Auswertung der Messkanäle überwacht. Dadurch können langsame Änderungen erkannt und nachgeregelt werden, um Einflüsse etwa durch Temperatur oder Toleranzen dynamisch zu minimieren. Auch sprunghaft auftretende Änderungen können kompensiert werden, indem die Messinformation bei Drehung der Rolle 12 über mindestens einen Umfang lang verfolgt wird und eine Plausibilitätsprüfung stattfindet.

Aus der Reihenfolge und dem Signalverlauf in den Messkanälen kann die Auswertungseinheit 30 die Transportrichtung der Objekte 42 ableiten. Weiterhin kann ermittelt werden, ob sich die Rolle 12 überhaupt dreht. Dazu wird beispielsweise ein Referenzelement dort am Außenumfang der Rolle 12 angebracht, wo keine Objekte 42 gefördert werden, also beispielsweise unten. Von diesem Referenzelement wird eine regelmäßige Beeinflussung der jeweils dort befindlichen Messkondensatoren 34 erwartet. Bleibt diese aus, so kann auf ein Stillstehen der Rolle 12 geschlossen werden, und außerdem können an unerwarteten Änderungen des am Referenzelement gemessenen Signals auch sonstige Störungen erkannt und gemeldet oder nachkalibriert werden.

Zur Störunterdrückung in rauen industriellen Umgebungen sind für die Messungen der Kapazitäten Konzepte wie Frequenzsprung oder Codierungen durch Pseudozufallssequenzen denkbar. Dadurch wird das System robust gegen elektromagnetische Störungen.

## Patentansprüche

1. Kapazitiver Sensor (10) für eine Rolle (12) einer Rollenbahn, der eine Vielzahl von Messelektroden (18) sowie eine Messeinheit (28) zur Bestimmung von Kapazitäten zwischen Messelektroden (18) aufweist, um ein auf der Rollenbahn befindliches Objekt (42) anhand von Kapazitätsänderungen zu erkennen,
**dadurch gekennzeichnet,**
**dass** zumindest ein Teil der Messelektroden (18) mit der Rolle (12, 16) mitdrehend angeordnet ist und so rotierende Messkapazitäten zwischen den mitdrehenden Messelektroden (18) bildet.

2. Sensor (10) nach Anspruch 1,
der Kopplungselektroden (22) aufweist, die bezüglich einer Drehachse (14) der Rolle (12) ruhend angeordnet sind und mit Messelektroden (18) Kopplungskapazitäten (32, 36) bilden.

3. Sensor (10) nach Anspruch 2,
wobei erste Kopplungselektroden (22) einen stationären Ring und zweite Kopplungselektroden (22) einen mit der Rolle (12) mitdrehenden Ring bilden.

4. Sensor (10) nach einem der vorhergehenden Ansprüche,
wobei die Messelektroden (18) ringförmig um eine Drehachse (14) der Rolle (12) ausgebildet sind.

5. Sensor (10) nach Anspruch 4,
wobei die ringförmigen Messelektroden (18) zugleich als Kopplungselektroden (22) fungieren.

6. Sensor (10) nach Anspruch 4 oder 5,
wobei die ringförmigen Messelektroden (18) in Umfangsrichtung segmentiert sind.

7. Sensor (10) nach einem der vorhergehenden Ansprüche,
wobei die Messelektroden (18) in axialer Richtung der Rolle (12) langgestreckte Streifen (18b) aufweisen.

8. Sensor (10) nach Anspruch 7,
wobei die Streifen (18b) mit einem Ring (18a) verbunden sind.

9. Sensor (10) nach einem der vorhergehenden Ansprüche,
der in axialer Richtung mehrere Segmente (38a-b) mit jeweils voneinander entkoppelten Messelektroden (18) aufweist.

10. Sensor (10) nach einem der vorhergehenden Ansprüche,
wobei eine Auswertungseinheit (30) vorgesehen ist, die dafür ausgebildet ist, aus den von der Messeinheit (28) bestimmten Kapazitäten eine örtlich und/oder zeitlich aufgelöste Kapazitätsänderung zu ermitteln und danach Objekte (42) zu erfassen oder zu klassifizieren.

11. Sensor (10) nach Anspruch 10,
wobei die Auswertungseinheit (30) dafür ausgebildet ist, Geometrieeigenschaften oder Bewegungsbahnen erfasster Objekte (42) zu bestimmen.

12. Sensor (10) nach Anspruch 10 oder 11,
wobei die Auswertungseinheit (30) dafür ausgebildet ist, ein Referenzsignal bei Abwesenheit von Objekten (42) zu bestimmen, insbesondere das Referenzsignal zyklisch oder auf Anfrage erneut zu bestimmen.

13. Sensor (10) nach einem der Ansprüche 10 bis 12,
wobei die Auswertungseinheit (30) für eine Drehüberwachung der Rolle (12) anhand der bei einem in Umfangsrichtung der Rolle (12) angebrachten Referenzelement gemessenen Kapazität ausgebildet ist

14. Rolle (12) mit einem Sensor (10) nach einem der vorhergehenden Ansprüche.

15. Verfahren zur Erkennung von auf einer Rollenbahn befindlichen Objekten (42), wobei in einer Rolle (12) der Rollenbahn zwischen einer Vielzahl von Messelektroden (18) Kapazitäten gemessen werden und die Anwesenheit eines Objekts (42) anhand von Kapazitätsänderungen erkannt wird,
**dadurch gekennzeichnet,**
**dass** Kapazitäten zwischen Messelektroden (18) gemessen werden, die sich mit der Rolle (12, 16) mitdrehen und so rotierende Messkapazitäten zwischen den mitdrehenden Messelektroden (18) bildet.

## Claims

1. A capacitive sensor (10) for a roller (12) in a roller conveyor, the sensor (10) comprising a plurality of measurement electrodes (18) as well as a measurement unit (28) for determining capacities between measurement electrodes (18) in order to detect an object (42) located on the roller conveyor by means of changes in the capacity,
**characterized in that** at least a part of the measurement electrodes (18) are arranged to rotate together with the roller (12, 16) and thus form rotating measurement capacities between the rotating measurement electrodes (18).

2. The sensor (10) according to claim 1,
comprising coupling electrodes (22) which are arranged stationary with respect to an axis of rotation (14) of the roller (12) and form coupling capacities (32, 36), with the measurement electrodes (18).

3. The sensor (10) according to claim 2,
wherein first coupling electrodes (22) form a stationary ring and second coupling electrodes (22) form a ring rotating together with the roller (12).

4. The sensor (10) according to any of the preceding claims,
wherein the measurement electrodes (18) are configured in a ring-shape around an axis of rotation (14) of the roller (12).

5. The sensor (10) according to claim 4,
wherein the ring-shaped measurement electrodes (18) are also used as coupling electrodes (22).

6. The sensor (10) according to claim 4 or 5,
wherein the ring-shaped measurement electrodes (18) are segmented in a circumferential direction.

7. The sensor (10) according to any of the preceding claims,
wherein the measurement electrodes (18) comprise elongated strips (18b) in an axial direction of the roller (12).

8. The sensor (10) according to claim 7,
wherein the strips (18b) are connected with a ring (18a).

9. The sensor (10) according to any of the preceding claims,
comprising a plurality of segments (38a-b) in the axial direction with measurement electrodes (18) being decoupled with respect to one another.

10. The sensor (10) according to any of the preceding claims,
wherein an evaluation unit (30) is provided which is configured to determine a spatially and/or temporally resolved change in capacity from the capacities determined by the measurement unit (28) and based on that to detect or classify objects (42).

11. The sensor (10) according to claim 10,
wherein the evaluation unit (30) is configured to determine geometric properties or trajectories of detected objects (42).

12. The sensor (10) according to claim 10 or 11,
wherein the evaluation unit (30) is configured to determine a reference signal in the absence of objects (42), in particular to again determine the reference signal periodically or on request.

13. The sensor (10) according to any of claims 10 to 12,
wherein the evaluation unit (30) is configured for a rotation monitoring of the roller (12) based on the capacity measured at a reference element mounted in circumferential direction of the roller (12).

14. Roller (12) having a sensor (10) according to any of the preceding claims.

15. A method for detecting objects (42) arranged on a roller conveyor, wherein capacities between a plurality of measurement electrodes (18) are measured in a roller (12) of the roller conveyor and the presence of an object (42) is detected from changes in the capacity,
**characterized in that** the capacities are measured between measurement electrodes (18) which rotate together with the roller (12, 16) and thus form rotating measurement capacities between the rotating measurement electrodes (18).

## Revendications

1. Détecteur capacitif (10) pour un rouleau (12) d'une voie à rouleaux, qui comprend une pluralité d'électrodes de mesure (18) ainsi qu'une unité de mesure (28) pour déterminer des capacités entre électrodes de mesure (18), afin de reconnaître un objet (42) qui se trouve sur la voie à rouleaux au moyen de modifications de capacité,
**caractérisé en ce que**
au moins une partie des électrodes de mesure (18) sont agencées de manière à tourner conjointement avec le rouleau (12, 16) et forment ainsi des capacités de mesure rotatives entre les électrodes de mesure (18) qui tournent conjointement.

2. Détecteur (10) selon la revendication 1,
qui comprend des électrodes de couplage (22), qui sont agencées en repos par rapport à un axe de rotation (14) du rouleau (12) et qui forment des capacités de couplage (32, 36) avec des électrodes de mesure (18).

3. Détecteur (10) selon la revendication 2,
dans lequel des premières électrodes de couplage (22) forment un anneau stationnaire, et des secondes électrodes de couplage (22) forment un anneau qui tourne conjointement avec le rouleau (12).

4. Détecteur (10) selon l'une des revendications précédentes,
dans lequel les électrodes de mesure (18) sont réalisées en formant un anneau autour d'un axe de rotation (14) du rouleau (12).

5. Détecteur (10) selon la revendication 4,
dans lequel les électrodes de mesure en forme d'anneau (13) font simultanément office d'électrodes de couplage (22).

6. Détecteur (10) selon la revendication 4 ou 5,
dans lequel les électrodes de mesure en forme d'anneau (18) sont segmentées en direction périphérique.

7. Détecteur (10) selon l'une des revendications précédentes,
dans lequel les électrodes de mesure (18) comportent des rubans allongés en longueur (18b) en direction axiale du rouleau (12).

8. Détecteur (10) selon la revendication 7,
dans lequel les rubans (18b) sont reliés à un anneau (18a).

9. Détecteur (10) selon l'une des revendications précédentes,
qui comprend en direction axiale plusieurs segments (18a-b) avec des électrodes de mesure (18) respectivement découplées les unes des autres.

10. Détecteur (10) selon l'une des revendications précédentes,
dans lequel il est prévu une unité d'évaluation (30) qui est réalisée pour détecter une modification de capacité à résolution locale et/ou à résolution temporelle à partir des capacités déterminées par l'unité de mesure (28), et ensuite pour détecter des objets (42) ou les classifier.

11. Détecteur (10) selon la revendication 10,
dans lequel l'unité d'évaluation (30) est réalisée pour déterminer des propriétés géométriques ou des trajectoires de déplacement des objets détectés (42).

12. Détecteur (10) selon la revendication 10 ou 11,
dans lequel l'unité d'évaluation (30) est réalisée pour déterminer un signal de référence en l'absence d'objets, et en particulier pour déterminer à nouveau le signal de référence de façon cyclique ou sur requête.

13. Détecteur (10) selon l'une des revendications 10 à 12,
dans lequel l'unité d'évaluation (30) est réalisée pour une surveillance en rotation du rouleau (12) au moyen de la capacité mesurée avec un élément de référence rapporté en direction périphérique du rouleau (12).

14. Rouleau (12) comprenant un détecteur (10) selon l'une des revendications précédentes.

15. Procédé pour reconnaître des objets (42) qui se trouvent sur une voie à rouleaux, dans lequel on mesure, dans un rouleau (12) de la voie à rouleaux, des capacités entre une pluralité d'électrodes de mesure (18), et on reconnaît la présence d'un objet (42) au moyen de variations de capacité,
**caractérisé en ce que**
on mesure des capacités entre des électrodes de mesure (18), qui tournent conjointement avec le rouleau (12, 16) et qui forment ainsi des capacités de mesure en rotation entre les électrodes de mesure (18) en rotation conjointe.
